# EUROPEAN PATENT APPLICATION

(11) **EP 1 280 304 A2**
(43) Date of publication of application: **29.01.2003**
(21) Application number: 02291058.2
(22) Date of filing: 25.04.2002
(51) Int. Cl.: H04L 12/56, H04L 29/06

(54) **Method and system for transferring packets of information**

(30) Priority: 30.05.2001 IT MI20011140
(71) Applicant: ALCATEL, 75008 Paris (FR)
(72) Inventor: Panico, Luigi, 84091 Battipaglia (Salerno) (IT)
(74) Representative: Colombo, Stefano Paolo

(57) **Abstract**

Described is a method for transferring packets of information from inputs to outputs of an electronic system fit for handling traffic of packets according to different priorities, wherein these system priorities are in a predetermined number; the system comprises a plurality of queues fit for storing packets of information, each one of the queues being associated to an input of the system and to an output of the system and to a priority of the system. The method comprises queuing operations during which a packet of information is received at an input of the system, and an output of the packet received and a priority of the packet received are determined, the packet received is stored in a queue associated to the reception input and to the determined output and to the determined priority. Additionally, the method comprises transferring operations, during which there is an identification phase of packets present in the first position of the queues, and a transferring phase, wherein the packets identified are extracted from the queues and transferred to the outputs. The identification phase is divided into a first sub-phase, wherein first packets present in the first position of the queues associated to the highest priority are identified by using a first method of identification and a second sub-phase, wherein second packets present in the first position of the queues associated to the remaining priorities are identified by using a second method of identification.

## Description

The present invention relates to a method for transferring packets of information and to a system using it.

In the following description, reference is often made to the well-known communication technique named ATM (Asynchronous Transfer Mode) without meaning this reference as a limitation.

The ATM technique allows the exchange of different kinds of information (voice, sounds, images, video, data) among users through a single interconnection ATM network which is variously branched through traffic of information packets between the users. In order to appropriately handle this exchange, a certain number of service classes are defined, typically: CBR (Constant Bit Rate), VBR-NRT (Variable Bit Rate - Non Real Time), VBR-RT (Variable Bit Rate - Real Time), ABR (Available Bit Rate), UBR (Unspecified Bit Rate).

The ATM technique uses a digital information packet having a fixed length (53 byte) named "cell"; the cell comprises a "header" of 5 bytes and a "payload" of 48 bytes; the header comprises information regarding the "Virtual Path Identifier", the "Virtual Channel Identifier", the "Payload Type" and the "Cell Loss Priority".

An ATM network substantially comprises switching systems, and links which connect the switching systems between them and links which connect the users to the switching systems; the links allows the flow of packets while the switching systems allow the correct routing of packets; additionally, there may be concentration and distribution systems. The flow of cells (and therefore of information) along the links are of asynchronous type.

An ATM switching system is provided with a plurality of inputs and a plurality of outputs; it receives cells at its inputs, and determines for each cell (on the basis of the information contained in the header) the output to which the cell has to be transferred, it transfers cell from its inputs to its outputs and thereafter transmits them from its outputs.

All the architectures studied for ATM switching systems require buffering of the cells, according to the type of architecture and the choices of the designer buffering at the inputs and/or buffering at the outputs and/or internal buffering and/or the recirculating buffering are used.

Traditionally, in the switching systems of ATM type, buffering at the outputs has been preferred, as it simplifies the implementation of the system. Recently, due to the increase in the link capacity, the output buffering technique has been abandoned in favor of the input buffering technique owing to problems of access speed of memories used to realize the buffers; a lot of research has been dedicated to this technique.

Nowadays the switching systems of ATM type are entirely electronic, that is, realized through electronic and optoelectronic components, even if the information flows at input and output often consists of optical signals carried by optical fibers; obviously it has not to be excluded that in the future there will be optical switching systems.

The present invention relates to a transferring method based upon the input buffering technique, in particular upon the technique named IBVOPQ (Input Buffer with Virtual Output Priority Queuing); an eventual further internal buffering and/or output buffering does not jeopardize the validity and the possibility of use of the method.

The article of R. Schoenen, "An Architecture Supporting Quality-of-Service in Virtual-Output-Queued Switches", IEICE Transactions on Communications, Vol.E83-B, No.2, February 2000, describes an architecture based upon the IBVOPQ technique.

The present invention tries to solve the problem of the scheduling of traffic of packets inside of a switching system based upon the IBVOPQ technique which has not yet found a fully satisfactory solution; in particular the mostly felt problem is connected to the respect of the quality of the service for the different types of traffic; the quality of service is measured, from the point of view of the switching system, in terms of average packet transfer delay , distribution of packet transfer delay , probability of packet non-transfer.

A solution for such a problem is given by the method for transferring packets of information having the functionality set forward in claim 1.

According to another aspect, - the present invention relates further to a system for transferring packets of information having the features set forward in claim 14, and that uses such a method.

Further advantageous characteristics of the present invention are set forward in the depending claims.

It is easy to understand that the teaching of the present invention can be applied also outside of the ATM communication technique, for example, in communication techniques where the packet of information is of variable length (IP technique) or the flows of information are of synchronous type (SDH technique).

The present invention will be more apparent from the following description to be read in combination with the attached drawings.

In the drawings:
Fig. 1 shows a simplified block diagram of an embodiment of a system according to the present invention, and
Fig. 2 shows a block diagram of a switching system which uses a system according to the present invention.

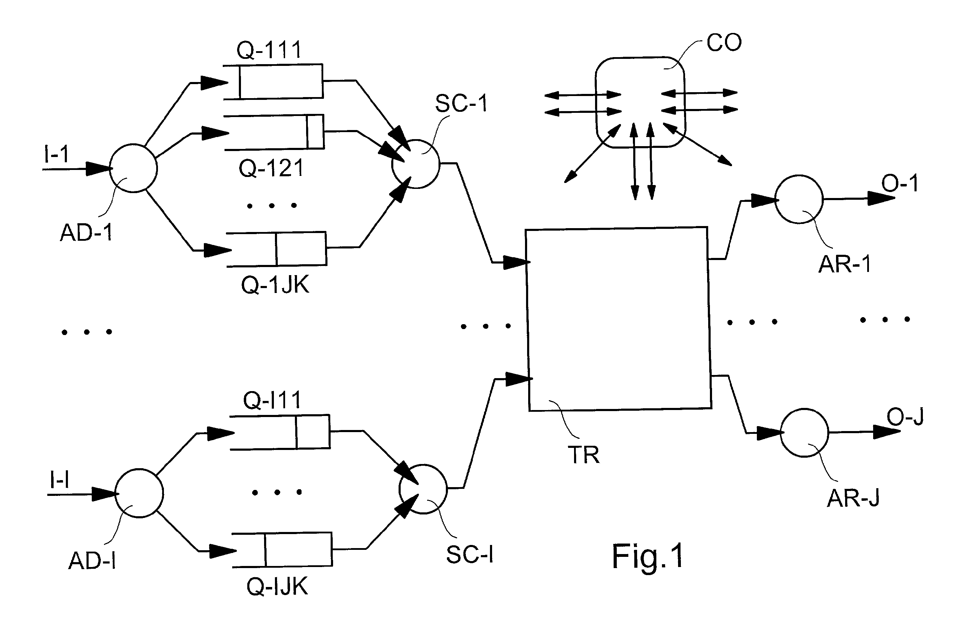

The system of Fig.1 is an ATM switching system provided with a plurality of inputs I-1 ... I-I, in a number equal to I, and a plurality of outputs O-1 ... O-J, in a number equal to J. To each input and each output is connected a link; in general, such links can have different capacities.

The system of Fig.1 is fit for handling traffic of packets according to different priorities P-1 ... P-K, in a number equal to K; the priority P-1 corresponds to the highest priority; each priority can, for example, correspond to a different class of service.

To each input I is associated a corresponding admission controller AD, a corresponding group of queues Q, a corresponding scheduler SC. Each queue is identified by three numbers: an input number, an output number, a priority number; for example, a generic queue Q-ijk is the queue of the input I-i of the output O-j and of the priority P-k. To each output O is associated a corresponding arbitrator AR. There is a transferring network TR having inputs associated to the schedulers SC and outputs associated to the arbitrators AR. Finally, there is a coordinator CO connected to the schedulers SC and the arbitrators AR; in Fig.1 these connections have been indicated only in a schematic way. For example, the connection between the input I-1 and the network TR is made so that each packet received at the input I-1 can be transferred to whichever queue Q-1jk to be later transferred to the corresponding input of the TR network. The outputs O-1 ... O-J of the system are connected to corresponding outputs of the TR network.

The architecture of the system described above with the help of Fig. 1 is ideal to implement a buffering technique of the IBVOPQ type.

The method according to the present invention serves to transfer packets of information from the inputs to the outputs of a system; such a system is to be of the type fit for handling traffic of packets according to different priorities (well-defined and in a certain predetermined number), and has to comprise a plurality of queues fit for storing packets of information, each queue being associated to an input of the system and to an output of the system and to a priority of the system; obviously, it is not necessary that the queues comprised in the system be of a number exactly equal to the product of the number of inputs, of the number of outputs and of the number of priorities: for example, if an input of the system receives packets only of voice type, to that input could be connected queues associated only to a certain priority.

Hereinafter we refer to the system of Fig.1 to facilitate the understanding of the method.

The method provides for queuing operations wherein a packet of information is received at an input I-i of the system, an output O-j of the packet received (selected among the outputs O of the system) and a priority P-k of the packet received (selected among the priorities P of the system) are determined, the packet received is stored into a queue Q-ijk associated to the input of reception I-i and to the output determined O-j and to the priority determined P-k; there are many methods through which it is possible to determine the output and the priority of the packet received which depend also on the communication technique (ATM, IP, ...); the packet received can contain information which allow more than one output - in such a case the packet is stored in more than one queue.

The present invention does not consider and is absolutely independent from the manner of determination of the priority of the packet; in some communication techniques, the information regarding the priority is contained in the header of the packet itself, in some communication techniques, such information is obtainable through association between information contained in the header of the packet and information contained in the tables of the system; additionally, there is the possibility to obtain this information by analyzing the information contained in the packet (for example data, audio, video, ...).

The method additionally provides for transferring operations, in which there is:
- an identification phase where packets present in the first position of queues Q are identified, and
- a transferring phase where the identified packets are extracted from the queues Q and transferred to the outputs O of the system.

The packets identified in the identification phase are to be transferred by the system, in particular by the TR network, in the following transferring phase. According to the status of the system and the status of queues, the packets identified during the identification phase can be all the packets present in the first position of queues Q, or a part of them or none, in the case in which all the queues Q are empty. The queues can be realized through hardware and/or software in many different manners; so, for example, the extraction of a packet from a queue can simply correspond to the modification of the memory address corresponding to the position of the first element of the queue. Also the transferring mechanism of packets inside the system, in particular inside the TR network, can be of different types according to the implementation primarily of the TR network but also of the SC schedulers and the AR arbitrators.

The queuing operations can be carried out independently from the transferring operations; additionally, the queuing operations corresponding to different inputs can be carried out in an independent manner.

The transferring phase of a transferring operation has to strictly follow the identification phase of the same operation, but it is possible, for example, to arrange for a transferring phase of an operation at the same time of the identification phase of the following operation.

Also in an ATM switching system of asynchronous type, it is possible to split the internal operation of the system into slots or successive time intervals, generally of fixed and equal duration; during the same slot, the transferring phase of an operation and the identification phase of the next operation can be carried out; some time slots can be used for maintenance functions; obviously, the level of parallelism of the operation depends on the implementation of the system through hardware and software.

In the method according to the present invention, the identification phase is divided into a first sub-phase wherein first packets present in the first position of the queues Q-ij1 associated to the highest priority are identified by using a first method of identification, and a second sub-phase wherein second packets present in the first position of the queues associated to the remaining priorities are identified by using a second method of identification.

The second method of identification can proceed globally on all the remaining priorities or progressively by growing priority.

The first method of identification can advantageously implement an algorithm of bidimensional "Round-Robin" type; the presence in a queue associated to the input I-i and to the output O-j of a packet of information can be interpreted as the request by the input I-i of using the output O-j to transmit that packet of information; in general, an algorithm of monodimensional Round-Robin type examines and satisfies cyclically the requests of use of a certain resource coming from a certain number of entities - in such a way all the entities are sooner or later satisfied; in general, an algorithm of bidimensional Round-Robin type examines and satisfies cyclically the requests of use of a resource, selected among a plurality of resources, coming from a certain number of entities, by keeping into account that many request can be satisfied at the same time provided that they do not refer to the same resource - in such a way, all the entities are sooner or later satisfied.

A detailed description of some algorithms of bidimensional Round-Robin type is contained in the article of R. LaMaire, D. Serpanos having the title "Two Dimensional Round-Robin Schedulers for Packet Switches with Multiple Input Queues" in the IEEE/ACM Transactions on Networking, Vol.2, No.5, pp. 471-482 of October 1991.

The second method of identification can be very heavy from the computability point of view; in fact, if the system is provided with 32 inputs and 32 outputs and 5 levels of priority, the second method shall examine 4096 packets and select which packets are to be identified.

It is surely desirable to reduce the number of packets to be examined.

The first method of identification identifies a group of packets of information to be transmitted in the following transmission phase; in practice, the first method identifies a set of inputs of the system and a set of outputs of the system; an input I-i of the system belongs to such a set of inputs, if it is an input for one of the packets of the group identified; an output of the system belongs to such a set of outputs, if it is an output for one of the packets of the group identified.

Now, according to the type of architecture which implements such a second method, it is possible to reduce remarkably the number of packets to be examined.

A reduction is obtained by implementing an algorithm which operates only on the packets present in the first position of the queues associated to the remaining priorities and to the inputs of the system not belonging to said set of inputs; if it is supposed that in the first sub-phase the set of inputs is made-up of 12 inputs, the number of the packets to be examined shall be (32-12)*32*4=2560.

A reduction is obtained also by implementing an algorithm which operates only on the packets present in the first position of the queues associated to the remaining priorities and to the outputs of the system not belonging to said set of outputs; if it is supposed that in the first sub-phase, the set of outputs be made-up of 12 outputs, the number of packets to be examined shall be 32*(32-12)*4=2560.

A still bigger reduction is obtained by implementing an algorithm which operates only on the packets present in the first position of the queues associated to the remaining priorities and to inputs of the system not belonging to said set of inputs and to outputs of the system not belonging to said set of outputs; if it is supposed that in the first sub-phase, the set of inputs is made-up of 12 inputs and the set of outputs is necessarily made-up of 12 outputs, the number of packets to be examined shall be only (32-20)*(32-20)*4=1600.

According to a preferred embodiment of the present invention, the second method of identification comprises the sorting of the packets present in the first position of the queues associated to the remaining priorities into groups of packets, wherein the packets of each group have been received at the same input I, and, for each group of packets, the selection of a packet by using a predetermined selection criterion.

This version of the method splits the processing of the second method into two parts thus reducing its complexity.

Additionally, this version of the method is particularly fit for a distributed implementation of the system, as shown in the Fig.1.

In this way, the selection of the packet can be implemented according to any of the scheduling algorithms used in the switching systems with output buffering.

The selection criterion can advantageously keep into account the priority of the packets; and this is useful and advantageous for exploiting completely the capacity of the switching system while complying with the quality of the service.

The selection criterion can advantageously keep into account the input of the packets; and this is useful and advantageous in case the capacities of the links of the various inputs are different between each other.

The selection criterion can advantageously keep into account packets previously transferred and/or packets still to be transferred and this is useful and advantageous if there is the intention to evaluate the quality of the service not only with respect to the single packet to be transferred but also with respect to the totality of the information to be transferred.

A particularly favorable selection can occur through one of the algorithms of "Weight Fair Queuing" type, that is, algorithms which try to approximate the algorithm "Fluid Fair Queuing" or "Generalized Processor Sharing".

Once the selection of the packets has been done, it is necessary to identify among these the packets to be transmitted. It results advantageous for maximizing the performances of the switching system to identify among the selected packets the packets which offer a satisfactory level of matching between the inputs I and the outputs O of the system. The highest matching level is the preferable level, but reasons of computation complexity can lead to be satisfied with lower levels. The matching level can be simply represented by the number of inputs and outputs which shall be involved into transferring of packets in the next transferring phase owing to this identification of packets (Best Size Match).

A simple and efficient architecture of the switching system provides that during a transferring phase each input can transfer to the TR network a single packet and each output can receive from the TR network a single packet.

Also for this architecture, the first method, as already said, identifies a set of inputs of the system and a set of outputs of the system; an input of the system belongs to the set of inputs if it is an input for one of the packets identified during the first sub-phase, an output of the system belongs to the set of the outputs if it is an output for one of the packets identified during the first sub-phase.

In this case, the second method does not identify packets having an input belonging to such set of inputs or having an output belonging to such set of outputs.

Independently from the architecture of the switching system, the matching level can be evaluated in a more sophisticated manner. When the selection of the packets occurs according to a predetermined criterion, this selection can involve for each packet the calculation of a weight and therefore the selection of the packet associated to the highest weight; the matching level can be then represented by the sum of the weights of packets identified (Best Weight Match).

As already said, according to another aspect, the present invention relates to a system for transferring packets of information which uses the method described.

The system, according to the present invention, is provided with a plurality of inputs I and a plurality of outputs O, and is fit for receiving packets of information, in particular ATM cells, at its inputs I, for transferring the packets from its inputs I to its outputs O, and to transmit the packets from its outputs O, and is fit for handling traffic of packets according to different priorities P, wherein said priorities are in a predetermined number K.

The number of priorities of the system can be determined during the design and construction phase of the system or, for example, at start-up or reset of the system based on configuration information; in this latest case, the number of priorities remains the same for the whole operative phase of the system. Such a system comprises :
- a plurality of queues Q fir for storing the packets received at the inputs I,
- admission control means fit for implementing queuing operations of packets received at the inputs I in the queues Q according to the method described,
- identification means fit for realizing the identification phase (of transferring operations according to the method described) of packets in the queues Q,
- transferring means fit for realizing the transferring phase (of transferring operations according to the method described) of packets from the queues Q to the outputs O.

The admission control means consists, in the example of Fig.1, of the admission controller AD; the identification means consists, in the example of Fig.1, of the schedulers SC, of the arbitrators AR and of the coordinator CO; the transferring means consists, in the example of Fig.1, substantially of the transferring network TR, even if both the schedulers SC and the arbitrators AR can be directly involved in the transferring phase; the TR network can be, for example, simply realized by a bus provided with the appropriate access control mechanisms.

According to a distributed embodiment of the system, the identification means comprises:
- a plurality of schedulers SC, in a number equal to the number of inputs I of the system, having a plurality of inputs connected to all the queues associated to the corresponding input, and having an output connected to the transferring means,
- a plurality of arbitrators AR, in a number equal to the number of outputs ○ of the system, having an input connected to the transferring means and an output connected to the corresponding output of the system,
- a coordinator CO connected to the schedulers SC and to the arbitrators AR and fit for exchanging with these control messages for realizing the identification phase of the transferring operations.

Still according to such a distributed realization of the system, the schedulers SC and the arbitrators AR can be fit for exchanging directly some control messages for realizing in a more effective manner the identification phase of the transferring operations.

When implementing the preferred version of the method according to the present invention, the selection of the packets can be advantageously implemented locally to the schedulers SC, in an independent manner for each input.

A system according to the present invention can be used directly as switching system, for example, of an ATM network, as the case of the example of Fig.1; in such a case the packets of information transferred by the system correspond to the ATM cells.

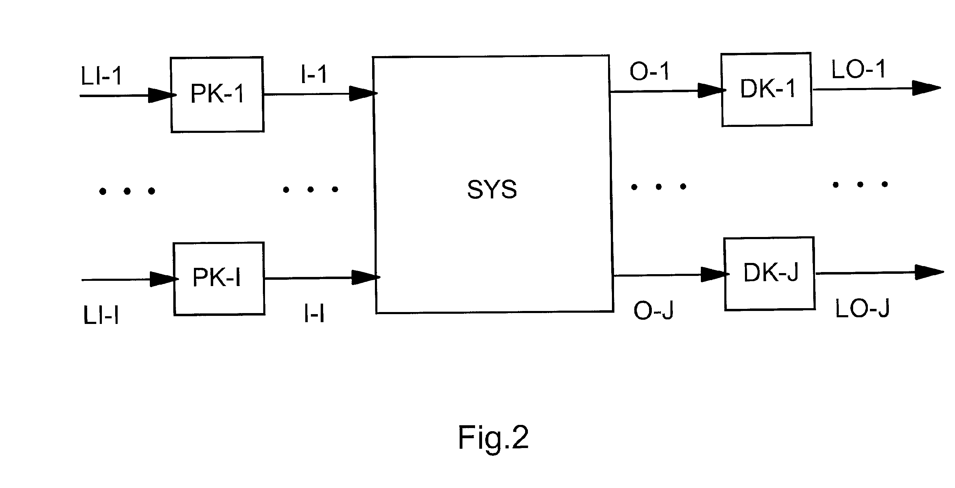

Alternatively a system according the present invention can be used as a component of a switching system; in such a case, it can be preceded and followed by elements (hardware and/or software) of packeting and depacketing, as shown in the Fig.2 for the system SYS.

Such a switching system is connected to a certain number I of input links LI-1 ... LI-I and to a certain number J of output links LO-1 ... LO-J.

For each input link LI there is a corresponding packeting element PK which has the task to receive information from the links LI-1 ... LI-I according to a transmission format (characteristic of LI links), to split the information into appropriate fragments, to insert the fragments of information into appropriate packets, and to forward the packets of information to the corresponding inputs I-1 ... I-I of the system SYS according to the present invention.

For each output link LO there is a corresponding depacketing element DK which has the task of receiving from the outputs O-1 ... O-J the packets of information transferred by the system SYS according to the present invention, to extract from the packets the fragments of information, to reconstruct the information into a transmission format (characteristic of LO links), and to transmit the information to the corresponding output links LO-1 ... LO-J.

The format of the packet of information handled by this system SYS (according to the present invention) does not correspond, generally, to any standard (ATM, IP, ...); this is not a problem, in fact it is an inner format of the switching system, but is an advantage, in fact, it can be chosen only on the basis of technical considerations.

Finally, the present invention relates further to a program product for processor comprising portions of code for carrying out entirely or partially the described method when they are executed by a processor and a memory for processor wherein portions of code are stored for carrying out entirely or partially the method described when they are executed by a processor.

## Claims

1. Method for transferring packets of information from inputs (I) to outputs (O) of a system, in particular a switching system, able to handle traffic of packets according to different priorities (P), wherein said priorities of the system are in a predetermined number (K), and said system comprises a plurality of queues (Q) fit for storing packets of information, each of said queues being associated to an input (I-i) and to an output (O-j) of the system and to a priority (P-k) of the system, the method comprising:
performing queuing operations, each queuing operation comprising:
receiving a packet of information at a system input (I-i);
determining an output (O-j) for the received packet;
determining a priority (P-k) of the received packet; and
storing the received packet buffered in a queue (Q-ijk) associated to the system input (I-i) where the packet of information is received, to the determined output (O-j) and to the determined priority (P-k),
performing transferring operations, each transferring operation comprising:
identifying the packets that are present in a first position of said queues (Q);
extracting said identified packets from the queues (Q); and
transferring said identified packets to the outputs (O),
**characterized in that** said step of identifying the packets is divided into
a first sub-step wherein first packets that are present in the first position of the queues (Q-ij1) associated to the highest priority are identified by using a first identification method, and
a second sub-step, wherein second packets that are present in the first position of the queues associated to the remaining priorities are identified by using a second identification method.

2. Method according to claim 1, **characterized in that** said first identification method implements a bidimensional Round-Robin algorithm.

3. Method according to claim 1 or 2, **characterized in that** said first identification method identifies a set of inputs of the system, an input of the system belonging to said set of inputs if it is an input for one of the identified first packets, wherein the second identification method implements an algorithm which operates only on packets present in the first position of the queues associated to the remaining priorities and to inputs of the system not belonging to said set of inputs.

4. Method according to claim 1 or 2, **characterized in that** said first identification method identifies a set of outputs of the system, an output of the system belonging to said set of outputs if it is an output for one of the identified first packets, wherein said second identification method implements an algorithm which operates only on packets present in the first position of the queues associated to the remaining priorities and to outputs of the system not belonging to said set of outputs.

5. Method according to claim 1 or 2, **characterized in that** the first identification method identifies a set of inputs of the system and a set of outputs of the system, an input of the system belonging to said set of inputs if it is an input for one of the identified first packets, an output of the system belonging to said set of outputs if it is an output for one of the identified first packets, wherein the second method of identification implements an algorithm which operates only on packets present in the first position of the queues associated to the remaining priorities and to inputs of the system not belonging to said set of inputs and to outputs of the system not belonging to said set of outputs.

6. Method according to claim 1 or 2, **characterized in that** said second method of identification comprises the step of sorting the packets present in the first position of the queues associated to the remaining priorities into groups of packets, the packets of each group having been received at the same input, and, for each group of packets, and the step of selecting a packet by using a predetermined selection criterion.

7. Method according to claim 6, **characterized in that** the step of selecting a packet by using a predetermined selection criterion comprises the step of using a criterion keeping into account the priority of the packets.

8. Method according to claim 6, **characterized in that** the step of selecting a packet by using a predetermined selection criterion comprises the step of using a criterion keeping into account the input of the packets.

9. Method according to claim 6, **characterized in that** the step of selecting a packet by using a predetermined selection criterion comprises the step of using a criterion keeping into account packets previously transferred and/or packets still to be transferred.

10. Method according to claim 6, **characterized in that** said step of selecting a packet by using a predetermined selection criterion comprises the step of making said selection through a Weight Fair Queuing algorithm.

11. Method according to any of claims 6-11, **characterized in that** said second method of identification further comprises the step of identifying, among the selected packets, the packets which lead to a satisfactory level of matching between inputs (I) and outputs (O).

12. Method according to claim 11, **characterized in that** said first method of identification comprises identifying a set of inputs of the system and a set of outputs of the system, an input of the system belonging to said set of inputs if it is an input for one of the identified first packets, an output of the system belonging to said set of outputs if it is an output for one of the identified first packets, wherein said second method of identification does not identify packets having input belonging to said set of inputs or having output belonging to said set of outputs.

13. Method according to claim 11 or 12, **characterized in that** said selection implies the calculation of a weight of the selected packet, and wherein the level of matching between inputs (I) and outputs (O) depends on the weights of the packets selected and identified.

14. System comprising a plurality of inputs (I) for receiving packets of information, a plurality of outputs (O) for transmitting the packets and means for transferring the packets from its inputs (I) to its outputs (O), the system being able to handle traffic of packets according to different priorities (P), with said priorities being in a predetermined number (K), **characterized in that** said system further comprises:
a plurality of queues (Q) fit for storing the packets received at the inputs (I),
admission control means (AD) fit for performing queuing operations of packets received at the inputs (I) to the queues (Q) according to the method according to any of the preceding claims,
identification means (SC, AR, CO) fit for realizing the identification phase of packets in the queues (Q) according to the method according to any of the preceding claims, and
transferring means (TR) fit for performing the transferring phase of packets from the queues (Q) to the outputs (O) according to the method according to any of the preceding claims.

15. System according to claim 14, **characterized in that** said identification means comprises:
a plurality of schedulers (SC), said schedulers being in a number equal to the number of the inputs (I) of the system, having a plurality of inputs connected to all the queues associated to the corresponding input, and having an output connected to the transferring means (TR),
a plurality of arbitrators (AR), said arbitrators being in a number equal to the number of outputs (O) of the system, having an input connected to the transferring means (TR) and to an output connected to the corresponding output of the system,
a coordinator (CO) connected to the schedulers (SC) and to the arbitrators (AR) and fit for exchanging with these control messages for realizing the identification phase of the transferring operations.

16. System according to claim 15, **characterized in that** the schedulers (SC) perform the selection of the second method of identification.
